# EUROPÄISCHE PATENTSCHRIFT

(11) **EP 2 453 527 B1**
(45) Veröffentlichungstag und Bekanntmachung des Hinweises auf die Patenterteilung: **14.06.2017**
(21) Anmeldenummer: 11008253.4
(22) Anmeldetag: 13.10.2011
(51) Int. Cl.: H01R 4/26, H01R 4/64, H02G 3/04, H02G 3/06

(54) **Kupplungselement mit Erdungsfunktion**
Coupling element with function as earth connection
Élément de couplage avec fonction de liaison à la terre

(30) Priorität: 10.11.2010 DE 202010015292 U
(43) Veröffentlichungstag der Anmeldung: 16.05.2012
(73) Patentinhaber: Tehalit GmbH, 67716 Heltersberg (DE)
(72) Erfinder: Schwarz, Jürgen, 67705 Trippstadt (DE); Stamer, Gernod, 66879 Kottweiler-Schwanden (DE); Szabo, Thomas, 66849 Landstuhl (DE); Arnold, Hans-Joachim, 67706 Krickenbach (DE)
(74) Vertreter: Nuss, Laurent

(56) Entgegenhaltungen:
- EP-A1- 1 081 820
- EP-A2- 2 184 820
- DE-U1- 29 817 946
- DE-U1-202007 009 424

## Beschreibung

Die vorliegende Erfindung betrifft ein Kupplungselement mit Erdungsfunktion zur Verbindung zweier Kabelkanalabschnitte. Ferner betrifft die Erfindung einen mit einem solchen Kupplungselement ausgerüsteten Kabelkanal.

Bei der Montage von Kabelkanalsystemen sind Kupplungselemente bekannt, bei denen aufeinander stoßende Kabelkanalabschnitte verbunden werden können. Solche Kupplungselemente sind beispielsweise in der EP 0 721 243 B1 oder der
DE 20 2004 005 987 U1 beschrieben.

Bei Metallkanälen kommt hinzu, dass diese für einen Potentialausgleich hinreichend geerdet werden müssen. Eine solche Erdungsklammer ist beispielsweise in der DE 297 11 068 U1 beschrieben. Das darin beschriebene Kupplungselement besteht aus einer Grundplatte mit einer zentralen Erdungsfahne sowie zackenförmigen Rändern, welche in das Unterteil eines Kabelkanals eingeschoben wird. Nachteilig ist, dass dieses Kupplungselement in den Kanalboden eingelegt wird, was insbesondere bei Kabelkanälen mit einer C-Schiene (zum Beispiel für Geräteeinbau) nicht möglich ist.

In der DE 20 2007 009 424 U1 wird eine Erdungskupplung für Leitungsführungskanäle aus Metall beschrieben, bei der einzelne Kontaktspitzen die elektrische Kontaktierung des Kanalunterteils bewirken. An einem Seitenelement ist durch einen dreiseitigen Freischnitt wenigstens eine Zunge ausgebildet. Die Kontaktspitzen befinden sich an dem Seitenprofil und bewirken im eingesetzten Zustand der Erdungskupplung mit dem Kanalunterteil den erwünschten elektrischen Potentialausgleich.

Im Hinblick auf diese bestehenden Lösungen ist es insbesondere bei Eloxal-beschichteten oder lackierten Aluminiumkanälen aufwändig, eine ausreichende elektrische Kontaktierung mit den erforderlichen Leitwerten für den Potentialausgleich zu erzielen. Daher musste man bislang bei beschichteten Kabelkanälen zum Teil sehr umfangreiche Kontaktierungsmaßnahmen treffen, um die erforderlichen Leitwerte zu erfüllen. Ferner waren bei vielen Kanaltypen für die mechanische Verbindung zweier Kabelkanalabschnitte getrennte Kupplungselemente notwendig. Beides erforderte einen hohen Material- und Montageaufwand. Dies gilt es zu vereinfachen.

Es ist daher Aufgabe der vorliegenden Erfindung, ein verbessertes Kupplungselement bereitzustellen, das eine schnelle und sichere elektrische Kontaktierung von beschichteten Kanälen, zugleich aber auch mechanische Kupplung zweier aufeinander stoßender Kabelkanalabschnitte bei einfacher Montage ermöglicht.

Diese Aufgabe wird gelöst durch ein Kupplungselement mit den Merkmalen des Anspruchs 1.

Bevorzugte Ausführungsformen finden sich in den Unteransprüchen wieder.

Das erfindungsgemäße Kupplungselement umfasst mehrere Funktionen in einem einzigen Bauteil. Es beinhaltet die Erdungsfunktion für den bei Metallkanälen erforderlichen Potentialausgleich, ermöglicht eine vereinfachte und nachträgliche Montage und verbindet schließlich zwei aufeinander stoßende Kabelkanalabschnitte mechanisch miteinander. Erreicht wird dies durch eine etwa rechteckförmige Grundplatte, an deren Kopfseite ein zur Kanalmitte angewinkelter Stützschenkel ausgebildet ist.

Das Kupplungselement wird parallel zu den Kanalseitenwänden des Unterteils eingesetzt. Vorzugsweise ist der Stützschenkel gezahnt, um ein Verrutschen des Kupplungselementes gegenüber dem Kanalunterteil an der Unterseite zu vermeiden. Dies ist insbesondere dann wichtig, wenn das Kupplungselement mit einem Ende bereits in einem Kabelkanalteil eingeschoben ist und ein zweiter Kabelkanalabschnitt auf das herausstehende Ende eingeschoben wird. Durch die zackenförmige Ausgestaltung des Stützschenkels wird verhindert, dass das Kupplungselement in das Kanalunterteil hineinrutscht. Ferner besitzt der Stützschenkel eine Stützfunktion, indem er mit einer Führungsrippe des Kanalunterteils kooperiert und dadurch das Einlegen des Kupplungselements in das Kanalunterteil erleichtert.

An der Grundplatte ist ferner wenigstens eine, vorzugsweise an deren Stirnseite ausgebildete Erdungsfahne ausgebildet. Am Fußende der Grundplatte befindet sich wenigstens eine Kontaktleiste, welche wenigstens einen zur Kanalaußenseite seitlich angewinkelten Kontaktarm besitzt, an dessen Unterseite eine Schneidkante ausgebildet ist. Vorzugsweise sind am Fußende der Grundplatte zwei von einem Schlitz getrennte Kontaktleisten ausgebildet, an deren Enden jeweils zur Kanalaußenseite weisende Kontaktarme seitlich angewinkelt sind. Jede der Kontaktleisten sorgt hierbei in dem jeweiligen Kabelkanalabschnitt für die notwendige elektrische Kontaktierung über die seitlich angewinkelten Kontaktarme. Die Schneidkante an der Unterseite der Kontaktarme schneidet sich hierbei in einem am Kanalboden ausgebildeten Steg, wenn das Kupplungselement an die Seitenwand des Kanalunterteils eingelegt und in die Montageposition gebracht wird. Durch den zur Kanalmitte angewinkelten Stützschenkel ist es möglich, dass das Kupplungselement zuerst oben in die Führungsrippe eingesetzt und dann zur Kanalseitenwand geschwenkt wird. Dabei schneiden sich die Kontaktarme in dem am Kanalboden ausgebildeten Steg und sorgen dadurch für die notwendige elektrische Kontaktierung. Gleichzeitig wird auf diese Weise das Kupplungselement mechanisch fixiert. Ein zusätzlich an der Unterseite der Kontaktleiste zur Kanalmitte angewinkelter Schenkel kann eine zusätzliche Stützfunktion mit einem Kanalelement übernehmen.

Aufgrund der seitlich angewinkelten Kontaktarme ist es erforderlich, dass die Kontaktleisten gegenüber der Grundplatte nach innen zur Kanalmitte versetzt sind. Dies wird durch eine zur Kanalmitte angewinkelte Schenkelleiste erzielt.

Zum Lösen der Verbindung oder für eine nachträgliche Demontage kann das erfindungsgemäße Kupplungselement vorzugsweise dadurch gelöst werden, indem ein Montagewerkzeug, beispielsweise ein Schraubendreher, in dafür vorgesehene Ausnehmungen an der Kontaktleiste eingeführt und das Kupplungselement anschließend zur Kanalmitte herausgehebelt wird. Zur erneuten Montage muss es dann einfach wieder zur Seitenwand des Kanalunterteils gedrückt werden.

In einer bevorzugten Ausführungsform ist an der Grundplatte eine Nase ausgebildet, die beispielsweise als Stützrippe oder zur Erzeugung eines zusätzlichen Reibverschlusses mit einem Kanalelement dienen kann.

Das erfindungsgemäße Kupplungselement ist vorzugsweise entlang der Querachse symmetrisch aufgebaut, um die erfindungsgemäß beanspruchten Funktionen für beide Kabelkanalabschnitte zu erfüllen. Auch wird die Handhabung dadurch erleichtert, dass beide Seiten eines Kabelkanals mit einem einzigen Kupplungselement montiert werden können.

Die wesentlichen Vorteile des erfindungsgemäßen Kupplungselements und ein damit ausgerüsteter Kabelkanal sind darin zu sehen, dass neben der elektrischen Kontaktierung zugleich eine Kupplungsfunktion erfüllt ist. Ferner wird die Montage erleichtert und auch eine nachträgliche Montage ist möglich. Insbesondere bei Eloxal-beschichteten, aber auch bei lackierten Aluminiumkanälen werden besonders gute Leitwerte für den elektrischen Potentialausgleich erzielt.

Die Erfindung wird in den nachfolgenden Zeichnungen näher erläutert. Es zeigen
- Fig. 1: verschiedene Ansichten des erfindungsgemäßen Kupplungselementes,
- Fig. 2: einen Kabelkanal mit eingesetztem Kupplungselement,
- Fig. 3: einen Kabelkanal mit einem Kupplungselement in Montageposition.

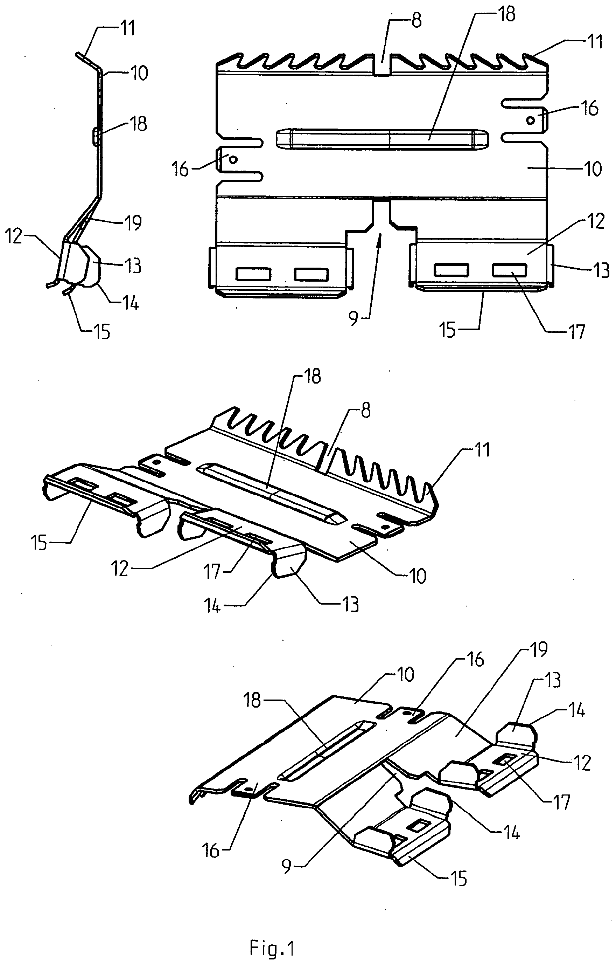

Das erfindungsgemäße Kupplungselement, wie in Fig. 1 beschrieben, besteht aus einer Grundplatte 10 mit jeweils einer Erdungsfahne 16 an den Stirnseiten der Grundplatte 10. Eine zentrale, an der Grundplatte 10 ausgebildete Nase 18 dient als Stützrippe. Eine gegenüber der Grundplatte 10 und an deren Kopfende zur Kanalmitte angewinkelte Stützleiste 11 dient zum einen als Verschiebesicherung des endgültig montierten Kupplungselements und erleichtert zum anderen das Einfädeln des Kupplungselements in ein Kanalunterteil 20. In der gezeigten Ausführungsform ist die Stützleiste 11 gezahnt ausgebildet, wobei die beiden Hälften der Stützleiste 11 durch einen Schlitz 8 voneinander unterbrochen sind. Am Fußende der in etwa rechteckförmigen Grundplatte 10 befindet sich eine Kontaktleiste 12, welche durch einen Schlitz 9 unterbrochen ist. An der Unterseite der Kontaktleiste 12 ist ein zur Kanalmitte angewinkelter Schenkel 15 ausgebildet. Die Kontaktleiste 12 ist gegenüber der Grundplatte 10 versetzt, was durch eine gegenüber der Grundplatte zur Kanalmitte angewinkelte Schenkelleiste 19 erreicht wird.

Eine Besonderheit des erfindungsgemäßen Kupplungselements sind die an der Kontaktleiste 12 seitlich ausgebildeten und nach außen angewinkelten Kontaktarme 13. Die Kontaktarme 13 sind jeweils an den seitlichen Enden der beiden Kontaktleistenhälften der Kontaktleiste 12 angeordnet. An der Unterseite der Kontaktarme 13 oder zumindest einem Bereich davon ist eine Schneidkante 14 ausgebildet.

Zum Eingreifen eines Montagewerkzeugs (zum Beispiel Schraubendreher) sind in der Kontaktleiste 12 Ausnehmungen 17 ausgebildet, um eine Demontage eines Kabelkanalsystems durch Heraushebeln des Kontaktelements zu erleichtern.

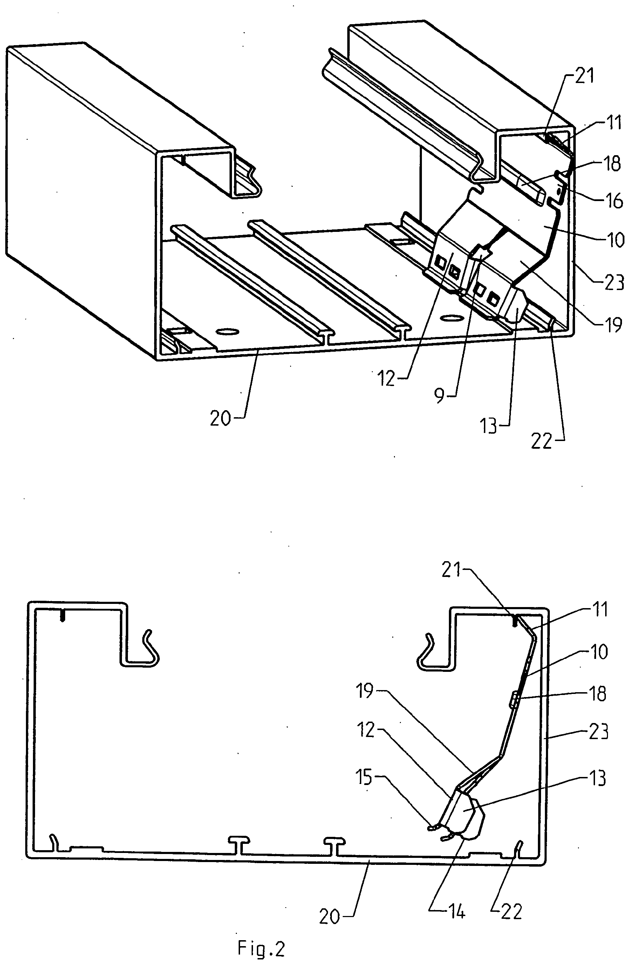

In Fig. 2 ist ein Kanalunterteil 20 gezeigt, bei dem ein erfindungsgemäßes Kupplungselement im eingesetzten, aber noch nicht montierten Zustand gezeigt ist. Das Kupplungselement wird über den gezahnten Stützschenkel 11 entlang einer Führungsrippe 21 in das Kanalunterteil 20 eingelegt. Der Stützschenkel 11 stützt sich hierbei gegen die Führungsrippe 21 ab. In der gezeigten Ausführungsform ist die Führungsrippe an einer Kanalumstülpung des Kanalunterteils 20 ausgebildet. Je nach Kabelkanalsystem kann jedoch die Führungsrippe 21 auch Bestandteil des Kanaloberteils sein.

Am Boden des Kanalunterteils 20 ist ein Steg 22 ausgebildet. Um das Kupplungselement von der eingesetzten Position in die Montageposition zu bringen, wird dieses nach außen zur Kanalseitenwand 23 gedrückt.

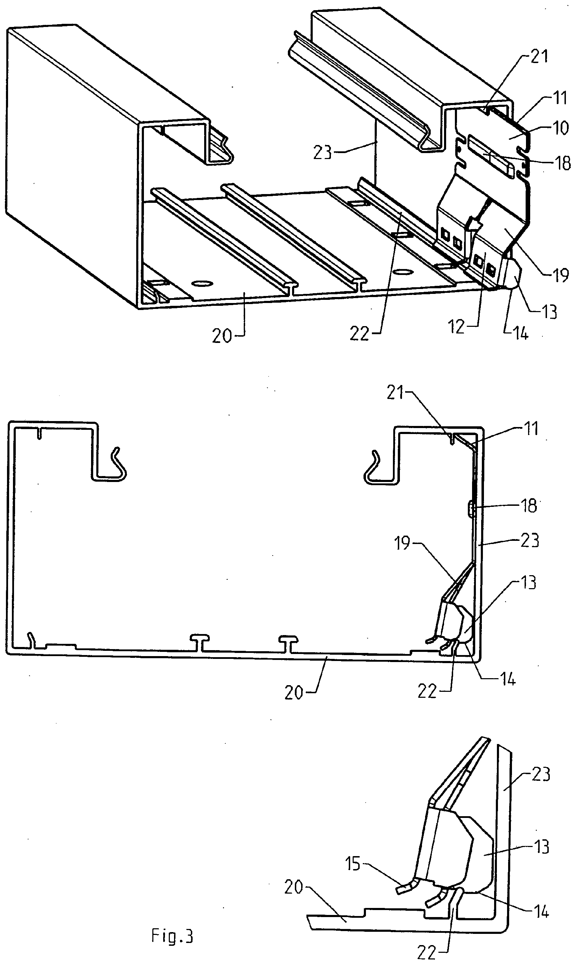

In Fig. 3 ist die Montageposition gezeigt. Die seitlich an den Kontaktleisten 12 zur Kanalaußenseite weisenden Kontaktarme 13 schneiden sich über die Schneidkante 14 innen am Kanalboden des Kanalunterteils 20 ausgebildeten Steg 22 hinein, wodurch die Eloxalbeschichtung bzw. Lackschicht befreit und eine elektrische Kontaktierung erzielt wird. Die Grundplatte 10 liegt hierbei an der Seitenwand 23 des Kanalunterteils 20 an. Der Stützschenkel 11 stützt sich gegen die Führungsrippe 21 ab. Durch die gezahnte Ausgestaltung des Stützschenkels 11 wird ein Verrutschen des Kupplungselements verhindert. Ein zusätzlicher, zur Kanalmitte angewinkelter Schenkel 15 kann sich gegen den Steg 13 des Kanalunterteils 20 zur Stabilisierung zusätzlich abstützen (Situation unten).

Der zweite Kabelkanalabschnitt wird auf das in dem ersten Kabelkanalabschnitt bereits eingesetzte Kupplungselement aufgeschoben. Dabei schneiden sich die Kontaktarme 13 der einen Hälfte der Kontaktleiste 12 in den Steg 22 des zweiten Kabelkanalabschnitts.

Das erfindungsgemäße Kupplungselement ermöglicht durch die dargestellte Ausgestaltung eine einfache Montage, zuverlässige elektrische Kontaktierung und mechanische Verbindung aufeinander stoßender Kabelkanäle.

## Patentansprüche

1. Kupplungselement zur elektrischen und mechanischen Verbindung zweier aufeinander stoßender Kabelkanalabschnitte, bestehend aus einer in etwa rechteckförmigen Grundplatte (10) mit wenigstens einer bezüglich einer möglichen Montageposition des Kupplungselementes in einem Kanalunterteil (20) an der Stirnseite der Grundplatte (10) ausgebildeten Erdungsfahne (16), sowie einem zum Kooperieren mit einer Führungsrippe (21) eines Kanalunterteils (20) geeigneten und bezüglich der genannten Montageposition zur Kanalmitte angewinkelten und gegenüber dieser Montageposition am Kopfende der Grundplatte (10) ausgebildeten Stützschenkel (11), **dadurch gekennzeichnet, dass** bezüglich der genannten Montageposition am Fußende der Grundplatte (10) wenigstens eine gegenüber der Grundplatte (10) bezüglich der genannten Montageposition zur Kanalmitte versetzte Kontaktleiste (12) ausgebildet ist, welche wenigstens einen in der genannten Montageposition zur Kanalaußenseite seitlich angewinkelten Kontaktarm (13) aufweist, an dessen Unterseite eine Schneidkante (14) ausgebildet ist.

2. Kupplungselement nach Anspruch 1, **dadurch gekennzeichnet, dass** der Stützschenkel (11) gezahnt ist.

3. Kupplungselement nach Anspruch 1 oder 2, **dadurch gekennzeichnet, dass** bezüglich der genannten Montageposition am Fußende der Grundplatte (10) zwei von einem Schlitz (9) getrennte Kontaktleisten (12) ausgebildet sind, an deren Enden bezüglich der genannten Montageposition jeweils zur Kanalaußenseite weisende Kontaktarme (13) seitlich angewinkelt sind.

4. Kupplungselement nach einem der vorhergehenden Ansprüche, **dadurch gekennzeichnet, dass** bezüglich der genannten Montageposition an der Unterseite der Kontaktleiste (12) ein bezüglich der genannten Montageposition zur Kanalmitte angewinkelter Schenkel (15) ausgebildet ist.

5. Kupplungselement nach einem der vorhergehenden Ansprüche, **dadurch gekennzeichnet, dass** an der Grundplatte (10) eine Nase (18) ausgebildet ist.

6. Kupplungselement nach einem der vorhergehenden Ansprüche, **dadurch gekennzeichnet, dass** an der Kontaktleiste (12) Ausnehmungen (17) für ein Montagewerkzeug ausgebildet sind.

7. Kupplungselement nach einem der vorhergehenden Ansprüche, **dadurch gekennzeichnet, dass** es zur Verbindung der Kabelkanalabschnitte entlang der Querachse symmetrisch aufgebaut ist.

8. Kupplungselement nach einem der vorhergehenden Ansprüche, **dadurch gekennzeichnet, dass** die Kontaktleiste (12) gegenüber der Grundplatte (10) durch eine bezüglich der genannten Montageposition zur Kanalmitte angewinkelte Schenkelleiste (19) versetzt ist.

9. Kabelkanal zur Führung von Kabeln und Leitungen, ausgerüstet mit einem Kupplungselement nach einem der Ansprüche 1 bis 8.

10. Kabelkanal nach Anspruch 9, **dadurch gekennzeichnet, dass** am Kanalboden des Kanalunterteils (20) ein Steg (22) ausgebildet ist, in den sich die Schneidkante (14) des Kontaktarms (13) zur elektrischen Kontaktierung in der Montageposition schneidet.

11. Kabelkanal nach Anspruch 9 oder 10, **dadurch gekennzeichnet, dass** eine Führungsrippe (21) entweder an einer Kanalumstülpung des Kanalunterteils (20) oder am Kanaloberteil ausgebildet ist.

12. Kabelkanal nach einem der Ansprüche 9 bis 11, **dadurch gekennzeichnet, dass** es sich um einen Eloxal-beschichteten und/oder lackierten Aluminiumkanal handelt.

## Claims

1. Coupling element for electrically and mechanically connecting two abutting cable duct sections, comprising an approximately rectangular base plate (10) with at least one earthing lug (16) which, with reference to a possible mounting position of the coupling element in a duct lower part (20), is formed on the end side of the base plate (10), and a supporting leg (11) which is suitable for cooperating with a guide rib (21) of a duct lower part (20) and is angled with reference to the stated mounting position towards the duct centre and is formed with respect to this mounting position at the head end of the base plate (10), **characterized in that**, with reference to the stated mounting position, at least one contact strip (12), which is offset with respect to the base plate (10) with reference to the stated mounting position towards the duct centre, is formed at the foot end of the base plate (10) and has at least one contact arm (13) which is angled laterally towards the duct outer side in the stated mounted position and on whose underside a cutting edge (14) is formed.

2. Coupling element according to Claim 1, **characterized in that** the supporting leg (11) is serrated.

3. Coupling element according to Claim 1 or 2, **characterized in that**, with reference to the stated mounting position, two contact strips (12) separated by a slot (9) are formed at the foot end of the base plate (10) and, with reference to the stated mounting position, contact arms (13) each pointing towards the duct outer side are laterally angled at the ends of said contact strips.

4. Coupling element according to one of the preceding claims, **characterized in that**, with reference to the stated mounting position, a leg (15), which is angled with reference to the stated mounting position towards the duct centre, is formed on the underside of the contact strip (12).

5. Coupling element according to one of the preceding claims, **characterized in that** a nose (18) is formed on the base plate (10).

6. Coupling element according to one of the preceding claims, **characterized in that** apertures (17) for a mounting tool are formed on the contact strip (12).

7. Coupling element according to one of the preceding claims, **characterized in that** it is of symmetrical design along the transverse axis in order to connect the cable duct sections.

8. Coupling element according to one of the preceding claims, **characterized in that** the contact strip (12) is offset with respect to the base plate (10) by a leg strip (19) which is angled with reference to the stated mounting position towards the duct centre.

9. Cable duct for routing cables and lines, equipped with a coupling element according to one of Claims 1 to 8.

10. Cable duct according to Claim 9, **characterized in that** a web (22) is formed on the duct bottom of the duct lower part (20), into which web the cutting edge (14) of the contact arm (13) cuts for electrical contact-making in the mounting position.

11. Cable duct according to Claim 9 or 10, **characterized in that** a guide rib (21) is formed either on a duct turnover of the duct lower part (20) or on the duct upper part.

12. Cable duct according to one of Claims 9 to 11, **characterized in that** it is an anodized and/or varnished aluminium duct.

## Revendications

1. Elément de couplage pour la liaison électrique et mécanique de deux tronçons en aboutement d'un caniveau de câbles, constitué d'une plaque de base (10) approximativement rectangulaire avec au moins une languette (16) de mise à la terre formée, relativement à une possible position de montage de l'élément de couplage, dans une partie (20) inférieure de caniveau sur le côté frontal de la plaque de base (10), ainsi que d'une branche de soutien (11), apte à coopérer avec une nervure de guidage (21) d'une partie (20) inférieure de caniveau, coudée vers le milieu du caniveau relativement à ladite position de montage et formée à l'extrémité de tête, par rapport à cette position de montage, de la plaque de base (10), **caractérisé en ce qu'**au moins une réglette de contact (12), décalée par rapport à la plaque de base (10) vers le milieu du caniveau relativement à ladite position de montage, est formée à l'extrémité de pied, relativement à ladite position de montage, de la plaque de base (10), réglette qui présente au moins un bras de contact (13), coudé latéralement vers le côté extérieur du caniveau dans ladite position de montage et sur le côté inférieur duquel est formée une arête de coupe (14).

2. Elément de couplage selon la revendication 1, **caractérisé en ce que** la branche de soutien (11) est dentée.

3. Elément de couplage selon la revendication 1 ou 2, **caractérisé en ce que** deux réglettes de contact (12) séparées par une fente (9) sont formées à l'extrémité de pied, relativement à ladite position de montage, de la plaque de base (10), réglettes aux extrémités desquelles des bras de contact (13), respectivement dirigés vers le côté extérieur du caniveau relativement à ladite position de montage, sont coudés latéralement.

4. Elément de couplage selon l'une des revendications précédentes, **caractérisé en ce qu'**une branche (15), coudée vers le milieu du caniveau relativement à ladite position de montage, est formée sur le côté inférieur, relativement à ladite position de montage, de la réglette de contact (12).

5. Elément de couplage selon l'une des revendications précédentes, **caractérisé en ce qu'**un ergot (18) est formé sur la plaque de base (10).

6. Elément de couplage selon l'une des revendications précédentes, **caractérisé en ce que** des évidements (17) pour un outil de montage sont formés sur la réglette de contact (12).

7. Elément de couplage selon l'une des revendications précédentes, **caractérisé en ce qu'**il est réalisé symétrique le long de l'axe transversal afin de relier les tronçons de caniveau de câbles.

8. Elément de couplage selon l'une des revendications précédentes, **caractérisé en ce que** la réglette de contact (12) est décalée par rapport à la plaque de base (10) par une réglette à branches (19) coudée vers le milieu du caniveau relativement à ladite position de montage.

9. Caniveau de câbles pour le guidage de câbles et de lignes, équipé d'un élément de couplage selon l'une des revendications 1 à 8.

10. Caniveau de câbles selon la revendication 9, **caractérisé en ce qu'**une saillie (22) est formée sur le fond de caniveau de la partie (20) inférieure de caniveau, saillie dans laquelle se coupe l'arête de coupe (14) du bras de contact (13) pour la mise en contact électrique dans la position de montage.

11. Caniveau de câbles selon la revendication 9 ou 10, **caractérisé en ce qu'**une nervure de guidage (21) est formée soit sur un retroussement de caniveau de la partie (20) inférieure de caniveau, soit sur la partie supérieure de caniveau.

12. Caniveau de câbles selon l'une des revendications 9 à 11, **caractérisé en ce qu'**il s'agit d'un caniveau en aluminium laqué et/ou recouvert d'une couche anodisée.
